(19) Europäisches Patentamt
European Patent Office
Office européen des brevets

(11) EP 3 751 793 A1

(12) EUROPEAN PATENT APPLICATION

(43) Date of publication:
16.12.2020 Bulletin 2020/51

(51) Int Cl.:
*H04L 12/40* (2006.01)

(21) Application number: 20175506.3

(22) Date of filing: 19.05.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 12.06.2019  JP 2019109214

(71) Applicant: YAZAKI CORPORATION
Minato-ku,
Tokyo 108-8333 (JP)

(72) Inventor: AKASHI, Masanori
Shizuoka, 410-1194 (JP)

(74) Representative: Grünecker Patent- und Rechtsanwälte
PartG mbB
Leopoldstraße 4
80802 München (DE)

(54) OCCUPANCY RATE CALCULATION DEVICE AND OCCUPANCY RATE CALCULATION METHOD

(57) An occupancy rate calculating device and an occupancy rate calculating method which can facilitate calculation of an occupancy rate of a transmission channel are provided. A relay 20 includes a transmission buffer 24 configured to receive message frames that are divided into groups based on transmission cycles so as to assign the message frames the groups. The relay 20 further includes a control unit 21 configured to count, for each group, kinds of the message frames received at the transmission buffer 24, calculates, based on a number of counts counted for each group and the transmission cycle of this group, an occupancy rate of a transmission channel by this group, and add up the calculated occupancy rates for the respective groups to calculate an occupancy rate as a whole.

## FIG.1

**Description**

Technical Field

The present invention relates to an occupancy rate calculation device and an occupancy rate calculation method for calculating an occupancy rate of a network when a device and such is connected to the network.

Background

For communication data to be transmitted through a transmission channel that constitutes a network, there is an upper limit for an amount of information that can be transmitted per unit time depending on a communication speed. When the amount of information exceeds the upper limit, transmission delay or missing of data or the like may occur.

Thus, for example Patent Document 1 discloses using a microcomputer 10 to sample a signal level of a communication bus 5 via an input buffer 40, thereby measuring a rate of low-level time with respect to a predetermined measurement time to detect a bus occupancy rate BR based on the measurement results. It also discloses that, if this bus occupancy rate BR is higher than a predetermined value, then notification of abnormality or a predetermined fail-safe operation will be executed.

Prior Art Document

Patent Document

Patent Document 1: JP 2003-244170 A

Summary of the Invention

Problem to be Solved

For example, for a network installed in a vehicle, on-vehicle devices are connected to this network. This network is designed such that entire communication data is equal to or below an upper limit by calculating in advance an occupancy rate of a transmission channel occupied by the communication data to be transmitted by each on-vehicle device. However, for example when a new on-vehicle device is added due to a design change and such, it is necessary to list all on-vehicle devices connected to the network, calculate again the occupancy rate by the communication data to be transmitted from each on-vehicle device, and adding up the calculated occupancy rates to check if this is equal to or below the upper limit.

The method disclosed in Patent Document 1 is a method for detecting abnormality after the network has actually been operated, and thus cannot be applied to verify whether the occupancy rate will be within the upper limit when the on-vehicle device is added due to a slight change in design or during development as described above.

In view of the above-described drawback, an object of the present invention is to provide an occupancy rate calculation device and an occupancy rate calculation method which can facilitate calculation of the occupancy rate of a transmission channel.

Solution to Problem

In order to achieve the above-described object, the present invention provides, in one aspect, an occupancy rate calculation device including: a reception unit configured to receive a plurality of kinds of communication data that are divided into groups based on transmission cycles, so as to assign the plurality of kinds of communication data to the groups; a count unit configured to count the kinds of the communication data received at the reception unit for a time period given for each of the groups; and a calculation unit configured to calculate an occupancy rate of a transmission channel by the communication data based on a number of counts counted by the count unit and the transmission cycle.

Advantageous effect of the Invention

According to the present invention described above, since the communication data are divided into groups based on the transmission cycles, the occupancy rate can be calculated for each group in a lump. Thus, the occupancy rate can be calculated easily without needing to list all on-vehicle devices connected to the network.

Brief Description of the Drawings

FIG. 1 is a schematic configuration diagram of a vehicle communication network having a relay including an occupancy rate calculation device according to one embodiment of the present invention;
FIG. 2 is a functional configuration diagram of the relay shown in FIG. 1;
FIG. 3 is a flowchart of a preparation operation to be set in advance in the relay shown in FIG. 1; and
FIG. 4 is a flowchart of an occupancy rate calculating operation in the relay shown in FIG. 1.

Detailed Description of the Exemplary Embodiments

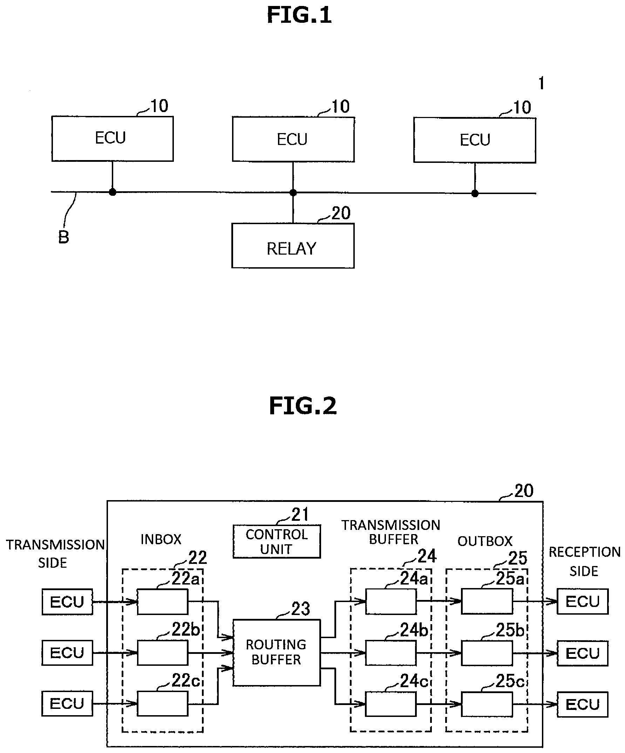

In the following, one embodiment of the present invention will be explained with reference to the drawings. FIG. 1 is a schematic configuration diagram of a vehicle communication network having a relay including an occupancy rate calculation device according to one embodiment of the present invention.

The vehicle communication network 1 is installed in a vehicle such as an automobile and includes a plurality of ECUs 10 and a relay 20 that are connected to a bus B, as shown in FIG. 1. In FIG. 1, the relay 20 includes an occupancy rate calculation device. The number of ECUs 10 is not limited to that shown in the drawings, it may be any number as long as it is within an upper limit for a communication protocol used in the vehicle communication network 1.

Herein, the ECU is an electronic control unit and is configured to control various on-vehicle devices. To this end, on-vehicle devices as loads (not shown in FIG. 1) are connected to the ECUs 10. Further, in this embodiment, communication with each ECU is performed through the bus B according to a CAN (Controller Area Network) communication protocol. However, protocols other than CAN, such as CAN FD (CAN with Flexible Data-Rate) and Ethernet (registered trademark) may also be used.

The ECU 10 generally includes a microcomputer having a CPU (Central Processing Unit) and memory such as ROM (Read-Only Memory) and RAM (Random-Access Memory), and a communication circuit and such. By executing a control program stored in the ROM, the CPU controls the load connected thereto and performs the entire control of the ECU.

The relay 20 functions to relay communication between the vehicle communication network 1 and a vehicle communication network of a different system. Further, the relay 20 includes the occupancy rate calculation device. Fig. 2 shows a functional configuration of the relay 20. FIG. 2 particularly shows a configuration associated with the occupancy rate calculation device. The relay 20 can receive all message frames as communication data transmitted through the bus B.

In this embodiment, the relay 20 includes the occupancy rate calculation device, and this is because the relay 20 can receive all message frames transmitted through the bus B. Hence, the function of the occupancy rate calculation device may be provided to any device other than the relay 20 that can receive all message frames transmitted through the bus B.

As shown in FIG. 2, the relay 20 includes a control unit 21, an inbox 22, a routing buffer 23, a transmission buffer 24 and an outbox 25.

The control unit 21 is constituted of a microcomputer having a CPU and memory such as ROM and RAM The control unit 21 controls each of the inbox 22, the routing buffer 23, the transmission buffer 24 and the outbox 25 to perform the entire control of the relay 20. Further, the control unit 21 performs an operation for calculating an occupancy rate of the transmission channel of the vehicle communication network 1 based on the message frames stored in the transmission buffer 24.

The inbox 22 is constituted of three inboxes, namely, inboxes 22a-22c. The inbox 22 receives a message frame inputted from the ECU 10 on the transmission side and temporarily stores the message frame. Although FIG. 2 illustrates three inboxes 22a-22c, the number of inboxes 22 is not limited to three and may be one or more.

The routing buffer 23 is configured to divide the message frames received by the relay 20 into groups in advance according to the transmission cycle, and assign the message frames stored in the inbox 22 to transmission buffers 24a-24c according to the groups.

The transmission buffer 24 is constituted of three transmission buffers, namely, the transmission buffers 24a-24c. The transmission buffer 24 is provided in number that corresponds to the number of the groups provided in advance in the grouping. FIG. 2 shows an example with three groups. The transmission buffer 24 is not limited to a configuration including the plurality of memories, and it may be constituted of one memory divided into a plurality of regions. That is, the transmission buffer 24 is configured to function as a reception unit that receives the plurality of kinds of message frames (i.e., the communication data) that has been divided into groups so as to assign the plurality of kinds of message frames to the groups. In addition, the transmission buffer 24 includes buffer regions each corresponding to each of the groups.

The outbox is configured to transmit the message frame stored in the transmission buffer 24 to the ECU 10 on the reception side at a predetermined timing.

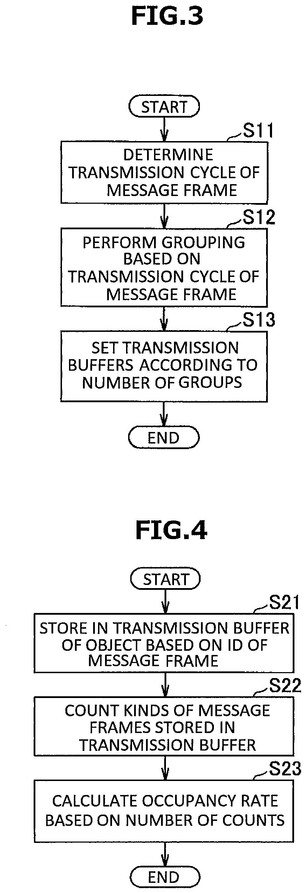

Next, a method for calculating an occupancy rate in the relay 20 having the above-mentioned configuration will be explained with reference to FIG. 3 and FIG. 4. Firstly, a preparation operation for pre-setting the relay 20 is explained with reference to a flowchart shown in FIG. 3.

Firstly, the transmission cycle of the message frame that is transmitted by each ECU 10 is determined (step S11). The transmission cycle of the message frame may appropriately be determined in accordance with characteristics and specification and such of a load to be connected to the ECU 10. Thus, in this embodiment, an object for which an occupancy rate is calculated is the message frame that is transmitted at a constant cycle.

Next, the message frames are divided into groups based on the transmission cycle determined in step S11 (step S12). In this embodiment, one group is provided for one transmission cycle. For example, when the transmission cycle of 20ms (millisecond) corresponds to the message frames having message IDs of "1" and "2", the transmission cycle of 30ms corresponds to the message frames having message ID of "3", and the transmission cycle of 50ms corresponds to the message frames having message ID of "4", then three groups will be provided since there are three transmission cycles. That is, the plurality of message frames (plurality of kinds of communication data) having different message IDs is divided into groups based on the transmission cycle.

Next, the transmission buffer is set in the relay 20 according to the number of groups provided in the grouping in step S12. For example, the memory regions of the transmission buffer 24 provided in the relay 20 are divided according to the number of groups (step S13). Further, a rule of a routing table of the routing buffer 23 is changed according to the grouping. These settings of and changes in the relay 20 can be performed by changing software that is executed by the control unit 10 of the relay 20, for example.

In the manner described above, the routing buffer 23 and the transmission buffer 24 of the relay 20 are prepared.

Next, an operation for calculating an occupancy rate of the vehicle communication network 1 (occupancy rate calculation method) using the relay 20 in which the setting is completed according to the flowchart of FIG. 3 will be explained with reference to a flowchart of FIG. 4. In this flowchart, actual devices (i.e., the ECU 10 and the relay 20) are operated to perform transmission and reception of the message frames. However, the operation time period may be any time period within a later-described time period, and may be a very-short time period. Further, since this flowchart is executed for calculating the occupancy rate, it may include an operation different from the actual operation except for the transmission cycle, and, for example, the message frame may be transmitted once for one ID.

Firstly, the received message frames are stored in the transmission buffer 24 of an object based on the IDs of the received message frames (step S21). In this step, by using the routing buffer 23, the message frames stored in the inbox 22 are assigned to one of the transmission buffers 24a-24c according to the grouping defined in the flowchart of FIG. 3 and stored thereto.

Herein, the time period for storing the message frame (hereinafter called, "storage time period") in the transmission buffer 24 in step S21 differs for the respective transmission buffers 24a-24c. This is because of the difference in the transmission cycles of the message frames stored in the respective transmission buffers 24a-24c. In this embodiment, the storage time period is set to be less than the transmission cycle corresponding to each transmission buffer 24a-24c. For example, if the message frame having the transmission cycle of 20ms is to be stored in the transmission buffer 24a, then the above-mentioned storage time period is set to be less than 20ms. This is to avoid from receiving the message frames having the same ID several times.

Next, the control unit 21 counts the kinds of the message frames stored in the transmission buffer 24 (step S22). In this step, for each transmission buffer 24a-24c, the control unit 21 counts the IDs (i.e., kinds) of the message frames stored in each transmission buffer 24a-24c. For example, when one message frame having the message ID of "1" and one message frame having the message ID of "2" are stored in the transmission buffer 24a, the count value of the transmission buffer 24a is "2". That is, the control unit 21 functions as a count unit that counts the kinds of the communication data received at the reception unit for a time period given for each group.

Then, the control unit 21 calculates the occupancy rate based on the count value counted in step S22 and the transmission cycle (step S23). An equation for calculating the occupancy rate is shown below as equation (1). That is, the control unit 21 functions as a calculation unit configured to calculate the occupancy rate of the bus B (transmission channel) by the message frames based on the number of counts and the transmission cycle.

$$\sum_{i=0}^{n} \frac{(1000msec/freq(i) \times maxframesize(i) \times count(i))}{1000msec} \times 100 \quad \cdots \quad (1)$$

In equation (1), 1000msec is unit time (i.e., per 1 second), "freq" is the transmission cycle, "maxframesize" is a maximum value of the message frame, "count" is the count value obtained by counting in step S22. The transmission cycle is known for the group corresponding to each transmission buffer 24a-24c. By dividing the product (i.e., multiplication together of these values) by 1000msec and multiplying the obtained value by 100, the occupancy rate of the bus B by this group per 1 second is calculated. By adding up the occupancy rates by the respective groups, the occupancy rate of the entire system is calculated.

As is clear from the explanation described above, step S21 functions as receiving step, step S22 functions as counting step, and step S23 functions as calculating step.

According to this embodiment, the relay 20 includes the transmission buffer 24 configured to receive, by assigning to groups, the message frames that have been divided into groups based on the transmission cycle. The relay 20 further includes the control unit 21 configured to count, for each group, the kinds of the message frames received at the transmission buffer 24 for the time period given for each group, calculate, based on the number of counts for each group and the transmission cycle of this group, the occupancy rate of the transmission channel by this group, and add up the calculated occupancy rates for the respective groups to calculate the occupancy rate as a whole.

With the relay 20 configured as described above, the message frames are divided into groups based on the transmission cycle, thus the occupancy rate can be calculated easily using the number of counts counted during the counting time period and the known transmission cycle. Further, since the occupancy rate can be calculated in a lump for each group, the occupancy rate can be calculated easily without listing all the on-vehicle devices that are connected to the network. Consequently, it is possible to easily make determination of whether an additional on-vehicle device due to design change and such needs to be connected or not.

Further, since the transmission buffer 24a-24c is provided for each group, the counting for each group can be performed by reading out from each transmission buffer 24a-24c, thereby allowing to correctly and easily perform the counting.

Further, in the embodiment described above, one group is given for one transmission cycle, however, one group may be given for a predetermined range of transmission cycles. For example, one group may be given for the transmission cycles of 20ms-30ms. By doing so, the occupancy rate can be calculated for a certain range in a lump. Thus, the occupancy rate can be calculated more rapidly.

When the grouping is performed for the range of transmission cycles, the storage time period in the transmission buffer 24 in step S21 falls within the range as: max cycle < storage time period < minimum cycle × 2. For example, for the group for the range of the transmission cycles of 20ms-30ms, the storage time period is 30ms < storage time period < 40ms. By doing so, the message frame with the message ID having the transmission cycle within the range for one group will certainly be stored once.

Further, in this embodiment, during the preparation shown in FIG. 3, a predetermined range of the message IDs can be assigned to the same group in advance based on the transmission cycle. For example, the message IDs of "001"-"010" can be assigned to one group, and the message IDs of "011"-"020" can be assigned to one group.

Assigning of the message IDs in the manner as described above can facilitate the grouping of the message frames to be transmitted from the ECU (i.e., the on-vehicle device) that is added at a later time. In addition, by pre-setting the routing buffer 23 to perform such assignment, the occupancy rate can be calculated without changing the setting of the routing buffer 23 even when there is an addition of the ECU.

For example, assuming that the message IDs of "001"-"010" are assigned for the message IDs in the group for the transmission cycles of 20ms-30ms, and the message IDs of "001"-"004" are presently being used. In this case, when one message frame out of the message frames to be transmitted from the ECU that is added in a later time has the transmission cycle of 20ms-30ms, this message frame can be assigned with the message ID of "005". By doing so, there is no need to change the setting of the routing buffer 23.

The embodiment has been described in association with the vehicle communication network 1, however, the present invention is not limited to this. The present invention can be applied to other moving objects such as a ship and an aircraft.

The present invention is not limited to the embodiment described above. That is, various changes and modifications may be made by a person skilled in the art with conventional knowledge without departing from the scope of the present invention. Embodiments with such changes and modifications are of course within the scope of the present invention as long as they include the configuration of the occupancy rate calculation device and the occupancy rate calculation method of the present invention.

List of Reference Signs

10    ECU
20    relay
21    control unit (count unit, first calculation unit, second calculation unit)
24    transmission buffer (reception unit)

**Claims**

1. An occupancy rate calculation device comprising:

    a reception unit configured to receive a plurality of kinds of communication data that are divided into groups based on transmission cycles, so as to assign the plurality of kinds of communication data to the groups;
    a count unit configured to count the kinds of the communication data received at the reception unit for a time period given for each of the groups; and
    a calculation unit configured to calculate an occupancy rate of a transmission channel occupied by the communication data based on a number of counts counted by the count unit and the transmission cycle.

2. The occupancy rate calculation device as claimed in claim 1, wherein the calculation unit is configured to:

    calculate an occupancy rate for each of the groups;
    add up the occupancy rates calculated for the respective groups; and
    calculate an occupancy rate as a whole.

3. The occupancy rate calculation device as claimed in claim 1, wherein the reception unit is provided with buffer regions each corresponding to each of the groups.

4. The occupancy rate calculation device as claimed in any one of claims 1-3, wherein the group is given such that one group is given for one transmission cycle.

5. The occupancy rate calculation device as claimed in any one of claims 1-3, wherein the group is given such that one group is given for a predetermined range of transmission cycles.

6. An occupancy rate calculation method that is executed by an occupancy rate calculation device configured to calculate an occupancy rate of a transmission channel, the method comprising:

    a receiving step of receiving a plurality of kinds of communication data that are divided into groups based on transmission cycles so as to receive for each of the groups;
    a counting step of counting, for each of the groups, the kinds of the communication data received in the receiving step for a time period given for each of the groups; and
    a calculating step of calculating the occupancy rate of the transmission channel occupied by the communication data based on a number of counts counted in the counting step and the transmission cycle.

# FIG.1

# FIG.2

# FIG.3

START

S11

DETERMINE
TRANSMISSION CYCLE OF
MESSAGE FRAME

S12

PERFORM GROUPING
BASED ON
TRANSMISSION CYCLE OF
MESSAGE FRAME

S13

SET TRANSMISSION
BUFFERS ACCORDING TO
NUMBER OF GROUPS

END

# FIG.4

START

S21

STORE IN TRANSMISSION BUFFER
OF OBJECT BASED ON ID OF
MESSAGE FRAME

S22

COUNT KINDS OF MESSAGE
FRAMES STORED IN
TRANSMISSION BUFFER

S23

CALCULATE OCCUPANCY RATE
BASED ON NUMBER OF COUNTS

END

Europäisches
Patentamt

European
Patent Office

Office européen
des brevets

# EUROPEAN SEARCH REPORT

Application Number

EP 20 17 5506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 447974 B2 (PANASONIC IP MAN CORP) 9 January 2019 (2019-01-09) | 1-6 | INV. H04L12/40 |
| Y | * the whole document * | 1-6 | |
| X | JP 2016 129339 A (PANASONIC IP MAN CORP) 14 July 2016 (2016-07-14) | 1-6 | |
| Y | * the whole document * | 1-6 | |
| Y | WO 2018/051833 A1 (AUTONETWORKS TECHNOLOGIES LTD [JP] ET AL.) 22 March 2018 (2018-03-22) * the whole document * | 1-6 | |
| A | EP 3 142 289 A1 (PANASONIC IP CORP AMERICA [US]) 15 March 2017 (2017-03-15) * abstract * | 1-6 | |

TECHNICAL FIELDS
SEARCHED      (IPC)

H04L

The present search report has been drawn up for all claims

| Place of search | Date of completion of the search | Examiner |
|---|---|---|
| Munich | 6 October 2020 | Le Bras, Patrick |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 20 17 5506

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2020

| Patent document cited in search report | | Publication date | Patent family member(s) | | Publication date |
|---|---|---|---|---|---|
| JP 6447974 | B2 | 09-01-2019 | JP 6447974 B2 | | 09-01-2019 |
| | | | JP 2015233343 A | | 24-12-2015 |
| JP 2016129339 | A | 14-07-2016 | JP 6108251 B2 | | 05-04-2017 |
| | | | JP 2016129339 A | | 14-07-2016 |
| WO 2018051833 | A1 | 22-03-2018 | JP 2018046515 A | | 22-03-2018 |
| | | | WO 2018051833 A1 | | 22-03-2018 |
| EP 3142289 | A1 | 15-03-2017 | CN 105594156 A | | 18-05-2016 |
| | | | CN 111181732 A | | 19-05-2020 |
| | | | EP 3142289 A1 | | 15-03-2017 |
| | | | JP 6417407 B2 | | 07-11-2018 |
| | | | JP 6670354 B2 | | 18-03-2020 |
| | | | JP 2019024227 A | | 14-02-2019 |
| | | | JP WO2015170451 A1 | | 20-04-2017 |
| | | | US 2016205194 A1 | | 14-07-2016 |
| | | | US 2019068715 A1 | | 28-02-2019 |
| | | | WO 2015170451 A1 | | 12-11-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003244170 A